# EUROPÄISCHE PATENTSCHRIFT

(11) **EP 3 052 427 B1**
(45) Veröffentlichungstag und Bekanntmachung des Hinweises auf die Patenterteilung: **11.12.2019**
(21) Anmeldenummer: 14780404.1
(22) Anmeldetag: 29.08.2014
(51) Int. Cl.: G05D 1/02

(54) **TRANSPORTFAHRZEUG UND VERFAHREN ZUM STÖRUNGSFREIEN TRANSPORT VON LASTREGALEN IN WERKSHALLEN MIT FUNKABSCHATTUNGEN UND MIT TEILWEISE AUTONOMEM FAHRBETRIEB**
TRANSPORT VEHICLE AND METHOD FOR A PROBLEM-FREE TRANSPORT OF HEAVY-DUTY SHELVES IN WORKSHOPS WITH RADIO SHADOWING USING A PARTLY AUTONOMOUS DRIVE MODE
VÉHICULE DE TRANSPORT ET PROCÉDÉ POUR LE TRANSPORT SANS PERTURBATION DE RAYONNAGES DE CHARGEMENT DANS DES USINES AVEC PROJECTIONS D'OMBRE RADIO ET UN FONCTIONNEMENT DE ROULAGE PARTIELLEMENT AUTONOME

(30) Priorität: 30.09.2013 DE 102013016381
(43) Veröffentlichungstag der Anmeldung: 10.08.2016
(73) Patentinhaber: Grenzebach Maschinenbau GmbH, 86663 Asbach-Baeumenheim (DE)
(72) Erfinder: KÜGLE, Bernhard, 86415 Mering (DE)
(74) Vertreter: Kindermann, Peter
(86) Internationale Anmeldenummer: PCT/DE2014/000455
(87) Internationale Veröffentlichungsnummer: WO 2015/043563

(56) Entgegenhaltungen:
- DE-A1-102011 110 196
- US-A1- 2010 078 232
- US-A1- 2013 177 379
- US-B1- 6 390 213

## Beschreibung

Die vorliegende Erfindung betrifft ein Transportfahrzeug und ein Verfahren zum störungsfreien Transport von Lastregalen in Werkshallen mit Funkabschattungen und mit teilweise autonomem Fahrbetrieb.

Aus der den Oberbegriff des Patentanspruchs 1 bildenden Druckschrift US 2010/0078232 ist ein Transportfahrzeug zum störungsfreien Transport von Lastregalen in Werkshallen mit Funkabschattungen mit teilweise autonomem Fahrbetrieb bekannt, wobei ein Fahrzeuggehäuse mit einer Trägerplatte zum Aufnehmen und Transportieren eines Lastregals mit Transportgut, mit zwei, beidseitig in der Mitte des Fahrzeuggehäuses an jeweils einer gesondert gelagerten Drehachse separat angetriebenen Antriebsrädern vorgesehen ist, wobei an der Vorderseite und an der Hinterseite des Fahrzeuggehäuses jeweils mindestens ein Stützrad vorgesehen ist.

In einer Vielzahl von Unternehmensbereichen, zum Beispiel dem Handel mit Lebensmitteln und Haushaltsartikeln oder Industrie- und Haushaltsprodukten, liegen Waren in sortenreinen Quellpaletten mit gleichartigen Gebinden in Lastregalen vor. Ein Gebinde kann hierbei ein verpacktes oder unverpacktes Stückgut oder eine Warenzusammenstellung wie beispielsweise eine Kiste, ein Karton oder eine Steige mit Schüttgut oder mehreren Einzelgütern wie Getränkeflaschen oder Molkereiprodukten sein.

Zur Zusammenstellung einer Lieferung an einen bestimmten Kunden müssen hieraus Pakete mit unterschiedlicher Bestückung oder Gebinden zusammengestellt werden.

Das Herbeischaffen einzelner Bestandteile einer solchen Lieferung kann hierbei händisch erfolgen oder mittels automatisch geführter Fahrzeuge. Solche so genannten AGVs (automatic guided vehicles) können mobile Roboter oder speziell für den jeweiligen Verwendungszweck konstruierte Fahrzeuge sein die mit einem speziellen Führungs- und Steuerungsverfahren von einem Ort zu einem anderen Ort bewegt werden.

Herkömmliche automatisch geführte Fahrzeuge, mit denen zum Beispiel Materialien in Fabriken und Lagerhäusern bewegt werden, weisen eine minimale Punktzu Punkt-Bewegungssteuerung auf. Die meisten solcher Systeme verwenden AGVs, die einer festen Leitspur folgen. Im Allgemeinen handelt es sich hierbei um einen Hochfrequenz - Sendeantennendraht, der im Fabrikboden versenkt angeordnet ist, einen auf den Boden aufgemalten reflektierenden Streifen, oder ein auf den Boden aufgeklebtes reflektierendes Band. Solche Leitspuren sind jedoch ersichtlich sehr verletzlich und unzuverlässig.

Alle diese Bewegungssteuerungen begrenzen die Bewegungsfreiheit der einzelnen AGV's, indem diese gezwungen werden einem physikalisch festgelegten Weg zu folgen.

Die meisten solcher Systeme verlassen sich auf die fahrzeugeigene Annäherungs-Detektion um Kollisionen mit anderen Fahrzeugen, unbewegten Objekten oder menschlichem Personal zu vermeiden. In solchen Systemen können sich die AGV's nur in einer Richtung längs der von ihnen verfolgten Spur bewegen.

Solche Systeme erreichen eine Punkt - zu - Punkt - Bewegung durch Implementieren von Steuerschemata und Verwenden frei beweglicher AGV's mit programmierbaren bidirektionalen Wegen. Hierdurch wird erreicht, dass sich mehrere AGV's ohne Kollisionen oder übermäßige Staus gleichzeitig auf denselben Wegen befinden.

Diese Verfahren maximieren den Freiheitsgrad der AGV - Bewegung. Das Steuerschema implementiert hierbei ein Schema der "statischen" Kollisionsvermeidung für AGV - Systeme. Im Wesentlichen wird dabei ein Computerprogramm verwendet zum Untersuchen der jeweiligen Umgebung eines AGV's um nur solche Wege zu ermitteln die für AGV's befahrbar sind. Ein weiteres Zuteilungsprogramm zieht hieraus die erforderlichen Daten um AGV's im jeweiligen System von einem Punkt zu einem anderen Punkt zu bewegen, ohne dass zwei AGV's gleichzeitig denselben Weg befahren.

Die Nachteile dieser Verfahren aus dem Stand der Technik bestehen darin, dass sie entweder auf geschlossene Pfade, eine unidirektionale Bewegung, auf das Fehlen der externen Steuerung der AGV - Bewegung oder auf die "statische" Kollisionsvermeidung beschränkt sind.

Zur Vermeidung dieser Nachteile ist aus der DE 689 28 565 T2 nach den Angaben im Patentanspruch 1 ein Verfahren zum Leiten von mehreren automatisch gelenkten Fahrzeugen (AGV) längs eines Netzes miteinander verbundener Wege bekannt, die bei Knotenpunkten beginnen, enden und Knotenpunkte enthalten.

Bei diesem Verfahren wird eine Aufzeichnung einer von den bestimmten AGV's zu verfolgenden Route in Form von, bei einem Knotenpunkt beginnenden und beim nächsten Knotenpunkt endenden, Wegabschnitten erstellt.

Ferner ist aus der Druckschrift DE 10 2011 110 196 A1 ein Mobilteil beschrieben, welches eine Elektronikeinheit und eine Aufnahmeeinheit, insbesondere eine Aufnahmeplatte, aufweist.

Es ist die Aufgabe der vorliegenden Erfindung ein autonomes Transportfahrzeug zu schaffen, mit dem der schnelle Transport von Lastregalen in großen Werkhallen störungsfrei auch bei unebenem Boden und bei leichten Steigungen ausgeführt werden kann. Zudem soll auch bei Funkabschattungen wie sie durch Metallwände oder abschattende Flächen entstehen, eine einwandfreie Kommunikation zwischen einer Leitzentrale und jedem Transportfahrzeug möglich sein.

Erfindungsgemäß wird diese Aufgabe durch die Merkmale des Patentanspruchs 1 gelöst.

In den Unteransprüchen sind weitere vorteilhafte Ausgestaltungen der Erfindung gekennzeichnet.

Die erfindungsgemäße Vorrichtung wird im Folgenden näher beschrieben.

Es zeigen im Einzelnen:
- Fig. 1 :: eine Anordnung von zu transportierenden Lastregalen,
- Fig. 2:: eine Annäherung eines Transportfahrzeugs an Lastregale,
- Fig. 3:: eine Orientierungs - Situation eines Transportfahrzeugs,
- Fig. 4:: eine Seitenansicht eines beladenen Transportfahrzeugs,
- Fig.5:: eine Draufsicht auf die Kinematik eines Transportfahrzeugs,
- Fig.6:: eine Detail - Darstellung der Kinematik eines Transportfahrzeugs,
- Fig.7:: eine Darstellung der Hot - spot - Funktionen von Transportfahrzeugen,

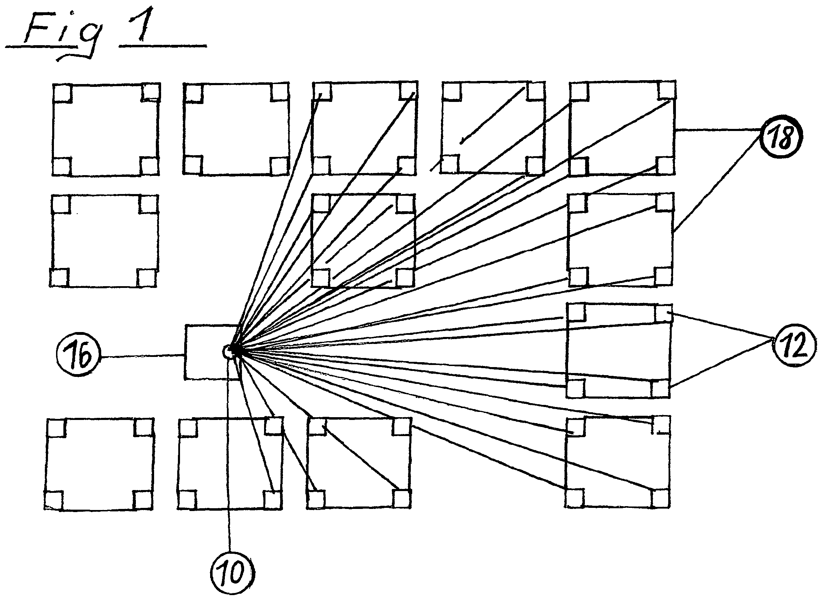

Die Fig.1 zeigt eine Anordnung von zu transportierenden Lastregalen. In dieser Darstellung sind als Teilausschnitt einige, auf jeweils vier Regalpfosten 18 stehende, Lastregale 12 in der Draufsicht zu sehen deren genaue Lage von einem Transportfahrzeug 16 mittels eines 3D - Scanners, oder auch als Laser - Scanners, 10 bezeichnet, erfasst wird.

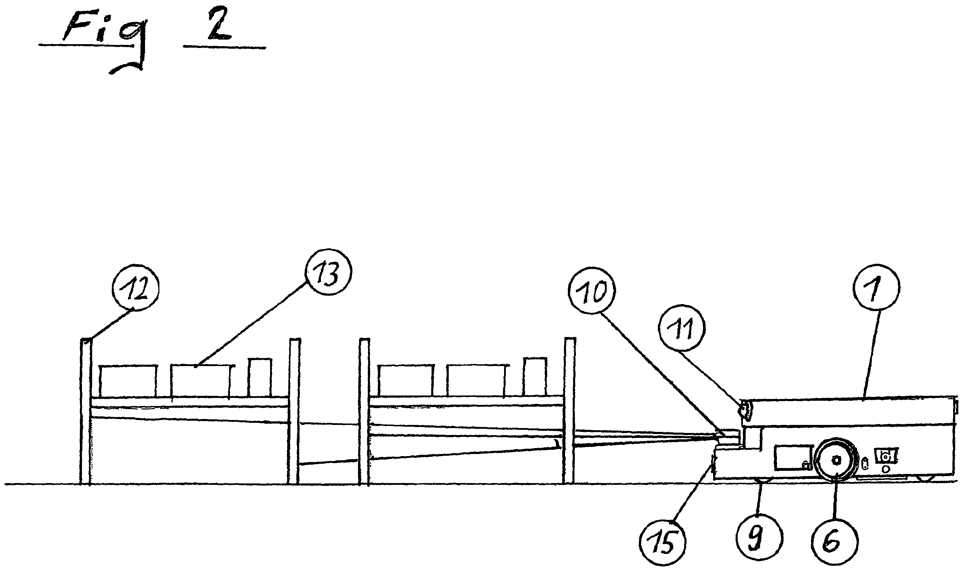

Die Fig.2 zeigt eine Annäherung eines Transportfahrzeugs an Lastregale 12. Im linken Bereich der Fig.2 sind zwei hintereinander stehende Lastregale 12 mit ihren Regalpfosten und ihrem aufliegenden Transportgut 13 dargestellt. Diesen beiden Lastregalen 12 nähert sich ein Transportfahrzeug mittels zweier Antriebsräder 6, von denen in der Seitenansicht lediglich eines zu erkennen ist, und einem vorderen Stützrad 9. Das hintere Stützrad ist hier nicht näher bezeichnet. Zur Aufnahme eines Lastregals 12 weist das Transportfahrzeug eine in der Höhe verstellbare Trägerplatte 1 auf. Zur Erfassung der Umgebung eines Transportfahrzeugs weist jedes dieser Fahrzeuge mindestens an der Frontseite einen 3D - Scanner 10 und einen Lichtfeld - Sensor 15 auf. Zur Funkverbindung mit einer Leitzentrale und / oder mit anderen Transportfahrzeugen weist jedes Transportfahrzeug mindestens eine WLAN - Antenne 11 mit den zugehörigen Sendegeräten und Empfangsgeräten auf.

Hinsichtlich des verwendeten Lichtfeld - Sensors 15, wird auf die neue Entwicklung der so genannten Minilinsen verwiesen, die in der Form von hunderten von Minilinsen nach dem Lichtfeldprinzip optische Informationen sammeln die dann später zu Bildern mit einer gewünschten Auflösung und / oder einem gewünschten Blickwinkel datentechnisch zusammengestellt werden können. Solche Minilinsen sind 3 - D - fähig, billig herzustellen und folgen dem Prinzip eines Insektenauges.

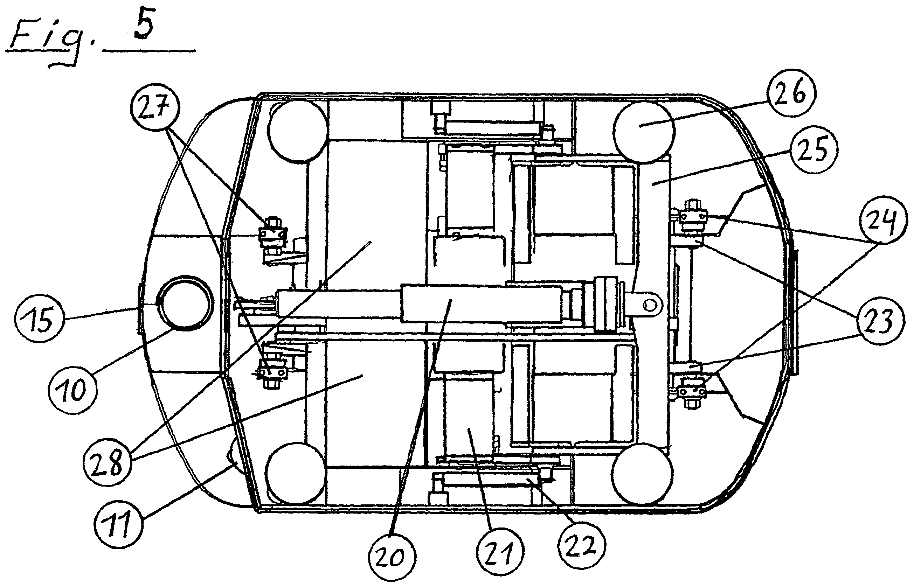

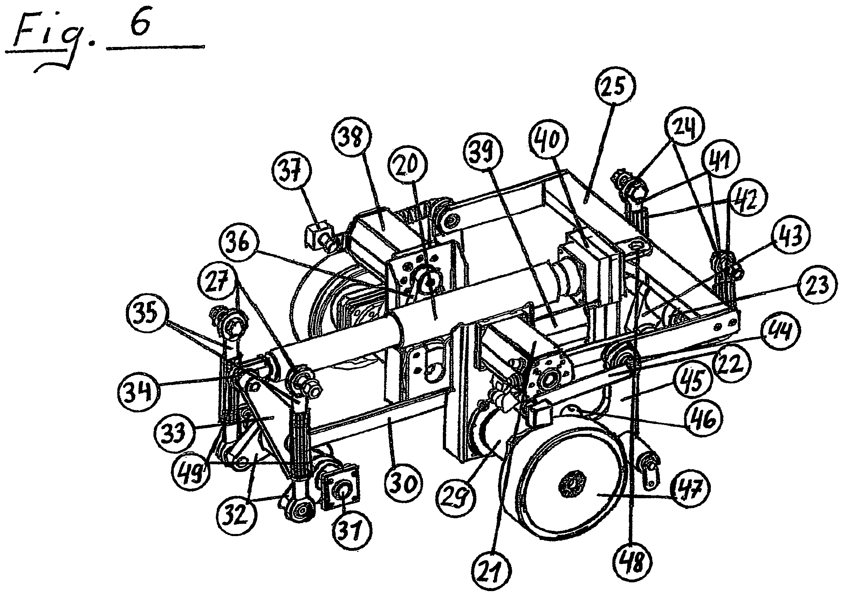

Eine nähere Beschreibung des Mechanismus der Fortbewegung und des Anhebens eines Lastregals 1 erfolgt bei der Beschreibung der Fig.5 und der Fig.6.

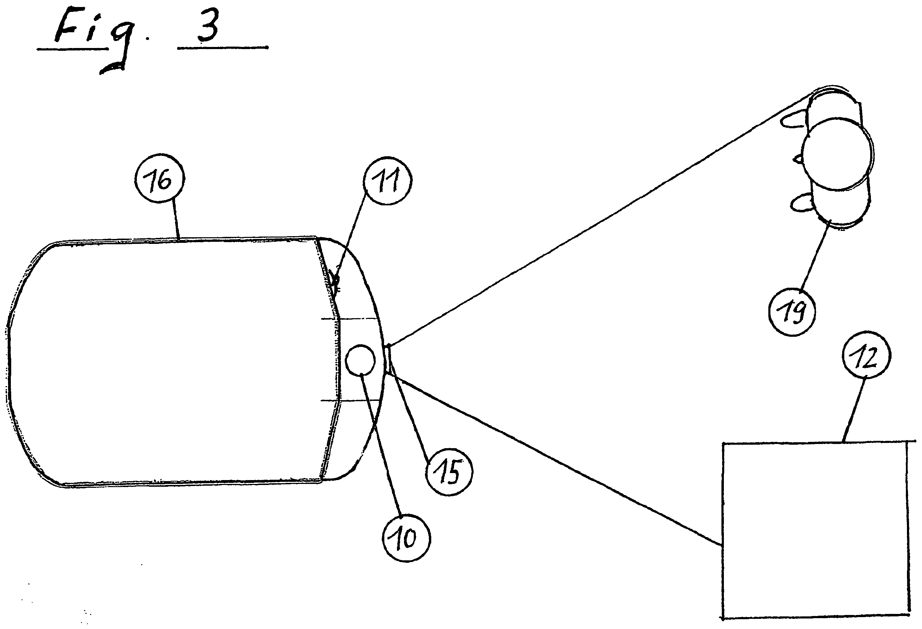

Die Fig.3 zeigt eine Orientierungs - Situation eines Transportfahrzeugs 16 mit realen Hindernissen.

Hierbei handelt es sich zum Einen um ein normales Lastregal 12, das wie vorher beschrieben, identifiziert werden kann und zum Anderen um eine Person 19, die eigentlich nicht in diese Umgebung gehört. Eine solche, ein ungewöhnliches Hindernis darstellende, Person 12 wird mittel eines Lichtfeld - Sensors 15 von einem Transportfahrzeug 16 erkannt. Der gezeigte 3D - Scanner 10 unterstützt die Lagebeurteilung aus der Sicht des Transportfahrzeugs 16.

Eine WLAN - Antenne 11 dient der aus der dargestellten Situation resultierendendKommunikation.

Für ein Transportfahrzeug 16 stellt sich die von ihm befahrene Arbeitswelt als eine Ansammlung von Regalpfosten 18 dar. Jeder Regalpfosten 18 kann an jeder seiner vier Seiten eine Markierung in Form eines Barcodes aufweisen, die ihn als Bestandteil eines bestimmten Lageregals ausweist und ihn für ein Transportfahrzeug 16 in der Hauptsache mittels seines 3D- Scanners 10 von allen Seiten identifizierbar macht.

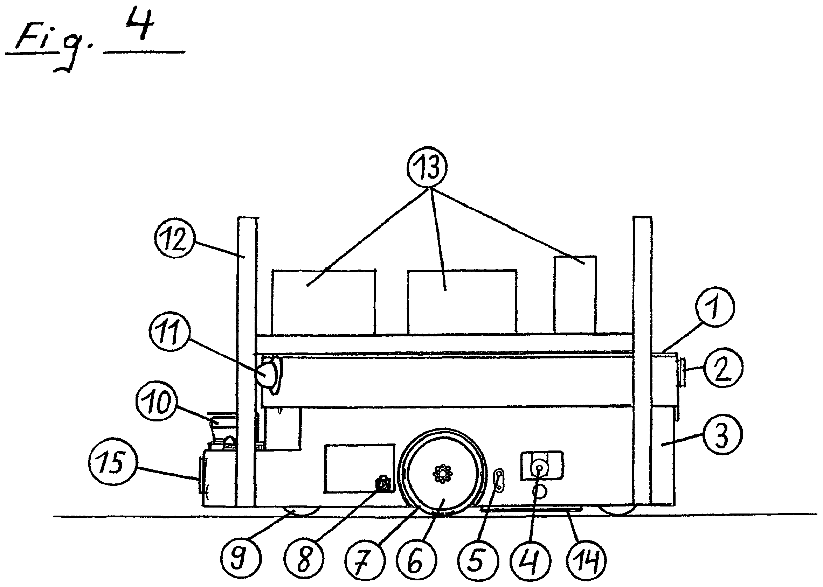

Die Fig.4 zeigt eine Seitenansicht eines mit Transportgut 13 beladenen Transportfahrzeugs. Seine Antriebsräder, hier ist das linke mit 6 bezeichnet, und die Stützräder, hier ist das vordere Stützrad 9 bezeichnet, berühren den Boden und das Lastregal 12 liegt auf der Trägerplatte 1 des Transportfahrzeugs auf. Der Belag 7 des linken Antriebsrads 6 kann jeweils entsprechend der Bodenbeschaffenheit ausgewählt werden. Die Drehachse 5, um die das linke Antriebsrad 6 sich in der Hauptsache vertikal bewegen kann, ist mit dem Gehäuse 3 des Transportfahrzeugs verbunden. In dieser Seitenansicht der Fig.4 ist die Ladekupplung 8 zum Anschluss einer elektrischen Ladevorrichtung zu erkennen. Ebenso kann elektrische Energie mittels eines induktiven Aufnahme - Elements 14 über im Boden verlegte elektrische Leitungen aufgenommen werden. Über solche Leitungen können natürlich auch Steuerungsanweisungen für jedes Transportfahrzeug von einer Leitzentrale übertragen werden. Diese Leitungen können auch der Kommunikation von Transportfahrzeugen untereinander dienen, wobei eine Leitzentrale beteiligt sein kann oder auch nicht. So kann es bei der Kommunikation von räumlich nahe beieinander lokalisierten Transportfahrzeugen einfacher sein, diesen Informationsweg zu wählen, ganz besonders wenn Funkabschattungen eine Rolle spielen. Auf dieser Seite ist ferner ein von außen betätigbares Bedienelement 4, beispielsweise in der Form eines Nothalts, vorgesehen. Auf der Rückseite des gezeigten Transportfahrzeugs ist ein Anzeige - Display 2 mit, für das Betriebspersonal relevanten, Informationen angebracht.

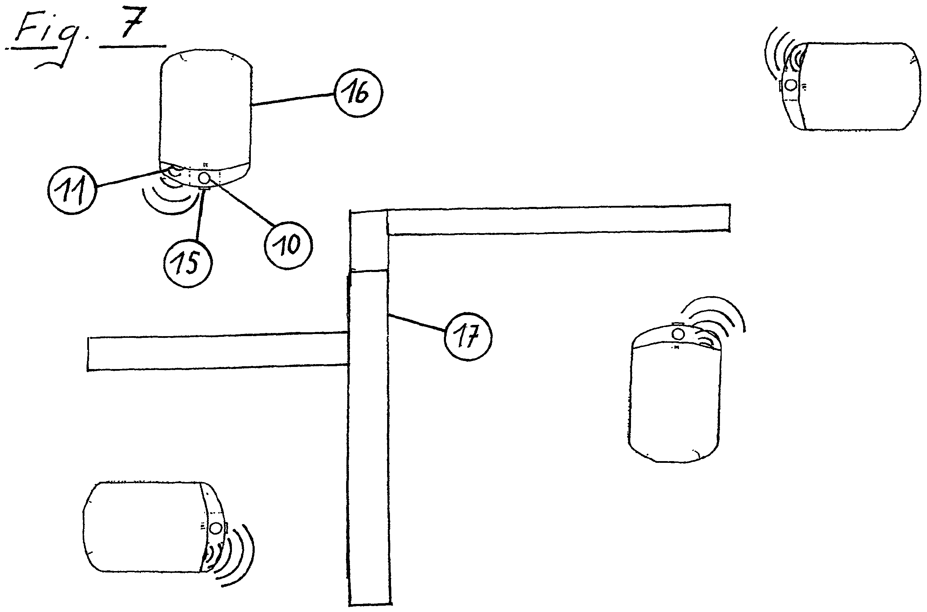

An der Vorderseite des Transportfahrzeugs sind ein 3D - Scanner 10 und ein Lichtfeld - Sensor 15 installiert. Die Funktion der, in diesem Bereich ebenfalls installierten, WLAN - Antenne 11 wird später bei der Beschreibung der Fig.7 beschrieben.

Fig.5 zeigt eine Draufsicht auf die Kinematik eines Transportfahrzeugs.

In dieser Fig.5 ist in zentraler Lage in Längsrichtung ein Stellelement 20, bzw. eine Gewindespindel, zu erkennen das, bei einer Verlängerung in der Längsrichtung, eine Anhebung der vier eingezeichneten kreisförmigen Zentrierelemente 26 über, in dieser Darstellung nicht sichtbare, Hebelemente bewirkt. Die Zentrierelemente 26 fügen sich in entsprechende Vertiefungen der Trägerplatte ein, die gewissermaßen ein "Hineinrutschen" in diese Fixierungen ermöglichen. Als Teil der genannten Hebelelemente 26 sind die hintere Tragplatten - Aufhängung 24 und die vordere Tragplattenaufhängung 27 zu sehen. Das Stellelement 20 stützt sich auf einen Querlenker 25 der über, hier nicht sichtbare, Hebelemente mit den beiden hinteren Hubstangenhebeln 23 verbunden ist.

In dieser Darstellung von oben sind beide Stellmotoren für die beiden Antriebsräder zu sehen, wobei lediglich der linke mit 21 bezeichnet ist. Die zu beiden Antriebsrädern führenden Federelemente stellen über, hier nicht erkennbare, Umlenkhebel sicher, dass die Antriebsräder auch auf unebenem Boden sicheren Bodenkontakt behalten. Auch hier ist lediglich das in Fahrtrichtung linksseitige Federelement mit 22 bezeichnet.

Mit 28 sind jeweils ein linksseitiger und ein rechtsseitiger Stellraum für Energiespeicher dargestellt. Hierbei kann es sich um elektrische Batterien oder um Energiespeicher für andere flüssige oder gasförmige Energieformen handeln.

Ein 3D - Scanner 10 und ein Lichtfeld - Sensor 15 sind an der Vorderseite des Transportfahrzeugs angebracht.

Beide Arten von Sensoren können jedoch auch zusätzlich noch an den beiden Seitenflächen und/oder an der Rückseite eines Transportfahrzeugs angebracht sein. Zusätzlich ist an der Vorderseite eine WLAN - Antenne 11 installiert. Diese kann auch durch eine weitere WLAN - Antenne 11 an der Rückseite des Transportfahrzeugs ergänzt werden.

Die Fig.6 zeigt eine Detail - Darstellung der Kinematik des Transportfahrzeugs. Diese Abbildung stellt das Transportfahrzeug ohne das umhüllende Gehäuse dar. Auf Verbindungen zu dem Gehäuse wird an entsprechender Stelle hingewiesen.

Zuerst wird die Kinematik der Antriebsräder erläutert

Im Vordergrund ist das, aus der Fig.4 bekannte, linksseitige Antriebsrad, hier mit 47 bezeichnet, und die zugehörige, rechts davon gezeichnete und nicht näher bezeichnete, Drehachse zu erkennen die an dem, hier ebenfalls nicht näher bezeichneten, Gehäuse des Transportfahrzeugs befestigt ist. Das Achslager 29 für das linksseitige Antriebsrad 47 mit seinem darüber liegenden, als Antrieb für das Antriebsrad 47 dienenden, Servomotor 21 sind mittels eines, nicht näher bezeichneten und nur von hinten zu sehendem, Winkelblech zu einer Funktionseinheit verbunden. In diesem Winkelblech läuft ein Zahnriemen über den der Servomotor 21 die Rotationsachse des linksseitigen Antriebsrads 47 antreibt. Auf der gegenüberliegenden Seite ist der entsprechende Servomotor 38 für den rechtsseitigen Antrieb zu erkennen. Auf dieser Seite ist das entsprechende Winkelblech in der gezeigten Darstellung von der anderen Seite zu sehen. Hier ist der in diesem Winkelblech laufende entsprechende Zahnriemen 36 gekennzeichnet. Die gesamte Funktionseinheit, bestehend aus dem Antriebsrad 47 mit dem Achslager 29, dem Servomotor 21 und dem Winkelblech mit seinem Zahnriemen, ist über einen Winkelhebel 45 um die, schon oben erwähnte, Drehachse schwenkbar. Der Winkelhebel 45 ist über ein Gelenk 44 an einem U - förmigen, über nahezu die gesamte Breite des Transportfahrzeugs verlaufenden, Querlenker 25 angelenkt, an dessen anderem Ende das rechtsseitige Antriebsrad entsprechend befestigt ist.

An dem Gelenk 44 ist weiter ein Federelement 22 gelagert, dessen anderer Lagerungspunkt am Gehäuse des Transportfahrzeugs befestigt ist. Auf der in der Fig.6 sichtbaren linken Seite des Transportfahrzeugs ist dieser Anlenkpunkt als klötzchenförmige, kaum erkennbare über dem Antriebsrad 47 gezeichnete, Lagerung gezeigt.

Dagegen ist auf der gegenüberlegenden Seite dieser Punkt als Anlenkpunkt 37 des entsprechenden rechten Federelements bezeichnet. Das Federelement 22 dient dem Zweck, über den Winkelhebel 45 das Antriebsrad 47 auf die Bodenfläche zu drücken und somit den Bodenkontakt des Antriebsrads 47 zu verbessern. Entsprechendes gilt für das gegenüber liegende rechte Antriebsrad.

Eine weitere kinematische Einrichtung wird im Folgenden zum Anheben eines Lastregals 1 erläutert.

Um ein Lastregal 12 aufnehmen zu können ist es erforderlich, dass das Transportfahrzeug nach dem Darunterfahren unter das Lastregal 12 dieses anhebt und seinen Bodenkontakt löst um es transportieren zu können.

Diesem Zweck dienen in direktem Kontakt die vorderen Hubstangen 35 und die hinteren Hubstangen 41.

Angehoben und abgesenkt werden die Hubstangen 35 und 41 mittels eines Stellelements 20, das wiederum in der Form einer Gewindespindel über einen ein - und ausfahrbaren Zylinder über einen Gelenkkopf 34 und einen angelenkten Hubdreh - Hebel 33 die hierfür notwendigen Kräfte aufbringt.

Aus der Fig.6 ist linksseitig deutlich zu erkennen wie der Hubdreh - Hebel 33 im Zusammenwirken mit jeweils einem vorderen Schubstangenhebel 32 mittels entsprechender Drehbewegungen um eine Drehachse 31, die mit dem Gehäuse des Transportfahrzeugs verbunden ist, die notwendigen Anhebungen oder Absenkungen der beiden vorderen Hubstangen 35 bewirkt.

Die vorderen Hubstangen 35 tragen jeweils die entsprechende vordere Trägerplatten - Aufhängung 27.

Gleichzeitig ist diesem Bereich der Fig.6 zu entnehmen, dass an dem Hubdreh - Hebel 33 eine Schubstange 30 angelenkt ist, die die Bewegungen des Hubdreh - Hebels 33 über einen Achshebel 43 auf jeweils einen hinteren Hubstangenhebel 23 überträgt. Die Bewegungen der hinteren Hubstangenhebel 23 führen zu den notwendigen Anhebungen oder Absenkungen der beiden hinteren Hubstangen 41. Die hinteren Hubstangen 41 tragen jeweils die entsprechende hintere Tragplatten - Aufhängung 24. Die vordere Tragplatten - Aufhängung ist mit 27 bezeichnet.

Die Bewegung des Stellelements 20, bzw. seiner Gewindespindel, erfolgt über einen Antrieb 39 und eine, die Kraft umleitende, Kraftübertragung 40. Die Kraftübertragung 40 ist mittels eines Gabelkopfs 48 am Querlenker 25 befestigt. Da der Gabelkopf 48 drehbar am Querlenker 25 gelagert ist, kann sich der Querlenker 25, als Verbindungselement zwischen dem Winkelhebel 45 und seinem gegenüberliegenden Pendant, bewegen und so wird ermöglicht, dass die beiden Antriebsräder voneinander unabhängige, vertikale Schwenkbewegungen ausführen können.

Die vorderen Hubstangen 35 und die die hinteren Hubstangen 41 weisen noch jeweils zusätzliche Stellelemente 49 für die vorderen Hubstangen 35 und zusätzliche Stellelemente 42 für die hinteren Hubstangen 41 auf die, die gesamte Trägerplatte aus jeweils einer, der Lagesicherung beim Fahrbetrieb dienenden, Raststellung herausheben, bevor der eigentliche Vorgang der Anhebung des Transportguts beginnt. Beispielhaft sind hier für die hinteren Hubstangen 41 die Stellelemente 42 bezeichnet. Die Ansteuerung der genannten Stellelemente kann separat und unabhängig von der vorher beschriebenen Anhebung des Transportguts erfolgen. Insgesamt wird durch die aufgezeigte Anordnung der Hubstangen 35 und 41, die dazwischen liegende Hebelanordnungen und das Stellelement 20 in Zusammenwirkung mit dem Querlenker 25, sowie dessen Einwirken auf den Winkelhebel 45 und sein Pendant, erreicht, dass der Schwerpunkt der Last von dem Lastregal direkt im Bereich der Antriebsräder liegt.

Zur Erfassung der Neigung des Transportfahrzeugs und des Transportguts wird ein besonderer Sensor verwendet, der jedoch nicht extra bezeichnet ist.

Da das Transportfahrzeug den Transport von Transportgut über schräge Ebenen ermöglicht, kann in vielen Fällen auf teuere und steuerungstechnisch aufwendige Liftanlagen verzichtet werden.

Es kann in einer besonderen Ausbildung vorgesehen sein, dass der Schwerpunkt des Lastregals 1 mittels Sensoren erfasst, und das Ergebnis einer solchen Schwerpunkt - Ermittlung zur Steuerung der Stellelemente der Hubstangen 35 und 41 verwendet wird.

Weiter kann es in einer besonderen Ausgestaltung vorgesehen sein, dass Sensoren zur Erfassung der Drehbewegung der Antriebsräder 47 vorgesehen sind, die auch in Abhängigkeit von der Geschwindigkeit des Transportfahrzeugs den Schlupf an jedem Antriebsrad 5 ermitteln können. Ein solcher Sensor 46 ist in der Fig.6 zur Erfassung der Drehbewegung des linksseitigen Antriebsrads 47 eingezeichnet.

Weiter kann es vorgesehen sein, mittels eines Neigungssensors die Neigung eines Lastregals 1 ermittelt wird.

Die Fig.7 zeigt eine Darstellung der Hot - spot - Funktionen von Transportfahrzeugen. Hier sind mehrere Transportfahrzeuge 16 mit ihren 3D - Scannern 10 und ihren Lichtfeld - Sensoren 15, sowie ihren WLAN - Antennen 11 inmitten einer Anordnung von elektromagnetischen Barrieren dargestellt.

Da gerade in großen Werkshallen oft zahlreiche Einbauten mit unterschiedlichem Innenleben anzutreffen sind, ist die Gefahr eines gestörten Funkverkehrs zwischen einer Leitzentrale und zahlreichen Transportfahrzeugen sehr groß.

Um unter solchen Umständen in jeder Fahrsituation der Transportfahrzeuge eine ungestörte Funkverbindung zwischen einer Leitzentrale und / oder einzelnen Transportfahrzeugen zu gewährleisten, wird in der vorliegenden Anmeldung vorgeschlagen, jedes Transportfahrzeug als einen mobilen Wlan - Hotspot auszubilden und somit Abschattungen von Funkwellen zu umgehen.

Die Fahrzeugsteuerung ist hierbei so ausgelegt, dass jedes Fahrzeug feststellen kann, ob ein Datenaustausch zwischen dem Fahrzeug und der Leitzentrale stattgefunden hat. Dies kann zum Beispiel durch ein Rückmeldesignal von der Leitzentrale an das Fahrzeug, oder umgekehrt, festgestellt werden. Ist die Datenverbindung unterbrochen, sendet das betreffende Fahrzeug eine entsprechende Nachricht aus, die von anderen Fahrzeugen erfasst werden kann. Sobald ein anderes Fahrzeug diese Nachricht erhalten hat, wird der Datenaustausch zwischen diesem Fahrzeug und dem Fahrzeug, das die Verbindung zu der Leitzentrale verloren hat, wieder hergestellt. Das entsprechende, nunmehr mit der Leitzentrale verbundene, Fahrzeug, dient dann als mobiler WLAN - Hotspot, auch als MIFI bezeichnet. Auf diese Weise dient dieses Fahrzeug solange als Datenverbindung zwischen dem, von der Abschattung betroffenen, Fahrzeug und der Leitzentrale bis eine direkte Datenverbindung wieder hergestellt werden kann.

Zur Steuerung der beschriebenen Transportfahrzeuge wird bevorzugt ein bekanntes Verfahren eingesetzt das von der Technischen Universität Berlin entwickelt wurde und am 10. Oktober 2007 veröffentlicht wurde unter:
Dynamic Routing of Automated Guided Vehicles in Real - time.
(Ewgenij Gawrilow, Ekkehard Köhler, Rolf H.Möhring, Björn Stenzel)
[http://www.math.tu-berlin.de/coga/publications/techreports/]

Es handelt sich hierbei im Wesentlichen um einen zweiteiligen Algorithmus, dessen erster Teil einen vorbereitenden Schritt umfasst und dessen zweiter Teil in Echtzeit eine Route berechnet und dabei für jeden Abschnitt ein bestimmtes Zeitfenster vorsieht

Die Anwendung des hier beschriebenen Verfahrens betraf ein AGV - Netzwerk im Container - Terminal Altenwerder im Hamburger Hafen. Die Anwendung desselben Verfahrens zum störungsfreien Betrieb von Automated Guided Vehicles in einem Warenhaus erscheint dagegen neu.

Die Steuerung der komplexen Bewegungsvorgänge und die Signalverarbeitung der verwendeten Sensoren erfordern ein spezielles Steuerungsprogramm.

### Bezugszeichenliste

- 1: Trägerplatte, Hubplatte
- 2: Anzeige - Display
- 3: Gehäuse, Fahrzeuggehäuse
- 4: Bedienelement, Nothalt
- 5: Drehachse
- 6: Antriebsrad
- 7: Belag eines Antriebsrads
- 8: Ladekupplung für elektrische Ladung
- 9: vorderes Stützrad
- 10: 3D - Scanner (Kollissionsschutz)
- 11: WLAN - Antenne (mobiler Hot - Spot)
- 12: Lastregal
- 13: Transportgut
- 14: induktives Aufnahme - Element für elektrische Energie
- 15: Lichtfeld - Sensor
- 16: Transportfahrzeug
- 17: elektromagnetische Barrieren
- 18: Regalpfosten
- 19: Person
- 20: Stellelement, Gewindespindel
- 21: Servomotor für linksseitiges Antriebsrad
- 22: Federelement
- 23: hinterer Hubstangenhebel
- 24: hintere Tragplatten - Aufhängung
- 25: Querlenker
- 26: Zentrierelement
- 27: vordere Tragplatten - Aufhängung
- 28: Stellraum für Energiespeicher
- 29: Achslager für das linksseitige Antriebsrad
- 30: Schubstange
- 31: Drehachse für einen vorderen Schubstangenhebel
- 32: vorderer Schubstangenhebel
- 33: Hubdreh - Hebel
- 34: Gelenkkopf
- 35: vordere Hubstange
- 36: Zahnriemen für den rechtsseitigen Antrieb
- 37: Anlenkpunkt des rechten Federelements am Gehäuse 3
- 38: Servomotor für den rechtsseitigen Antrieb
- 39: Antrieb für das Stellelement 20
- 40: Kraftübertragung vom Antrieb 39 zum Stellelement 20
- 41: hintere Hubstange
- 42: Stellelement für eine hintere Hubstange
- 43: Achshebel
- 44: Gelenk für einen Winkelhebel 40
- 45: Winkelhebel
- 46: Sensor zur Erfassung der Drehbewegung des linksseitigen Antriebsrads
- 47: Antriebsrad linksseitig
- 48: Gabelkopf
- 49: Stellelement für eine vordere Hubstange

## Patentansprüche

1. Transportfahrzeug zum störungsfreien Transport von Lastregalen in Werkshallen mit Funkabschattungen mit teilweise autonomem Fahrbetrieb, mit den folgenden Merkmalen:
a) einem Fahrzeuggehäuse (3) mit einer Trägerplatte (1) zum Aufnehmen und Transportieren eines Lastregals (12) mit Transportgut (13), mit zwei, beidseitig in der Mitte des Fahrzeuggehäuses (3) an jeweils einer gesondert gelagerten Drehachse (5) separat angetriebenen Antriebsrädern (6), wobei an der Vorderseite und an der Hinterseite des Fahrzeuggehäuses (9) jeweils mindestens ein Stützrad (9) vorhanden ist,
**dadurch gekennzeichnet, dass**
b) ein Querlenker (25) vorhanden ist, der die jeweils über einen Winkelhebel (46) um die Drehachse (5) schwenkbaren Antriebsräder (6) so verbindet, dass diese voneinander unabhängige vertikale Bewegungen ausführen können, wobei der Querlenker (25) drehbar an einem Gabelkopf (48) gelagert ist,
c) ein zentral angeordnetes Stellelement (20) vorhanden ist, das über einen Hubdreh-Hebel (33) und eine mit diesem verbundene Schubstange (30) zwei vordere Hubstangen (35) und zwei hintere Hubstangen (41) zum Anheben oder Absenken der Trägerplatte (1) bewegen kann,
d) ein System zur Energieversorgung des Transportfahrzeugs entweder über induktive, im Boden verlegte Leitungen, mittels eines induktiven Aufnahmeelements (14) vorhanden ist oder über stationär anfahrbare Energieversorgungs-Stationen für die Zufuhr elektrischer, flüssiger oder gasförmiger Energie, wobei im Fahrzeuggehäuse (3) Stellraum (28) für entsprechende Energiespeicher vorhanden ist,
e) mindestens ein 3D-Scanner (10) und mindestens ein Lichtfeld-Sensor (15), sowie mindestens eine WLAN-Antenne (11) im vorderen Bereich des Fahrzeugkörpers (9) vorhanden sind.

2. Transportfahrzeug nach Anspruch 1, **dadurch gekennzeichnet,**
**dass** auf jeder Seite des Transportfahrzeugs mindestens ein 3D-Scanner (10) und mindestens ein Lichtfeld-Sensor (15) vorhanden sind, wobei im hinteren Bereich des Transportfahrzeugs eine weitere WLAN - Antenne installiert ist.

3. Transportfahrzeug nach Anspruch 1 oder 2, **dadurch gekennzeichnet,**
**dass** die vorderen Hubstangen (35) jeweils ein Stellelement (49) und die hinteren Hubstangen (41) jeweils ein Stellelement (42) zur separaten Höheneinstellung aufweisen.

4. Transportfahrzeug nach einem der vorhergehenden Ansprüche, **dadurch gekennzeichnet,**
**dass** der Schwerpunkt des Lastregals (12) mittels Sensoren erfasst, und dass das Ergebnis einer solchen Schwerpunkt-Ermittlung zur Steuerung der Stellelemente für die Hubstangen (35) und (41) verwendet wird.

5. Transportfahrzeug nach einem der vorhergehenden Ansprüche, **dadurch gekennzeichnet,**
**dass** Sensoren (46) zur Erfassung der Drehbewegung der Antriebsräder (6) vorhanden sind, die auch in Abhängigkeit von der Geschwindigkeit des Transportfahrzeugs den Schlupf an jedem Antriebsrad (6) ermitteln können.

## Claims

1. Transport vehicle for transporting storage shelves by partially autonomous operation and without interference in factory buildings having deadspots, the transport vehicle having the following features:
a) a vehicle housing (3) having a support plate (1) for receiving and transporting a storage shelf (12) having transported goods (13), having two separately driven drive wheels (6) on both sides of one in each case individually mounted rotation axle (5) in the center of the vehicle housing (3), wherein in each case at least one support wheel (9) is present on the front side and on the rear side of the vehicle housing (9), **characterized in that**
b) a transverse link (25) is present which connects the drive wheels (6) which are in each case by way of an angular lever (46) pivotable about the rotation axle (5) such that said drive wheels (6) may execute mutually independent vertical movements, wherein the transverse link (25) is rotably mounted on a fork head (48),
c) a centrally disposed control member (20) is present which by way of a lift-and-rotate lever (33) and by way of a push rod (30) connected to the latter may move two front lifting rods (35) and two rear lifting rods (41) for lifting or lowering the support plate (1),
d) a system for supplying energy to the transport vehicle either by way of inductive lines installed in the floor, by means of an inductive pickup element (14) or by way of energy supply stations which are for feeding electrical, liquid, or gaseous energy and are accessible when stationary, is present wherein installation space (28) for corresponding energy storage units is present in the vehicle housing (3),
e) at least one 3-D scanner (10) and at least one light-field sensor (15), and at least one WLAN antenna (11) are present in the front region of the vehicle body (9).

2. Transport vehicle according to Claim 1, **characterized in that** at least one 3-D scanner (10) and at least one light-field sensor (15) are present on each side of the transport vehicle, wherein a further WLAN antenna is installed in the rear region of the transport vehicle.

3. Transport vehicle according to Claim 1 or 2, **characterized in that** for separate height adjustment the front lifting rods (35) in each case have one control member (49), and the rear lifting rods (41) in each case have one control member (42) .

4. Transport vehicle according to one of the preceding claims, **characterized in that** the center of gravity of the storage shelf (12) is detected by means of sensors, and **in that** the result of such center-of-gravity determination is used for controlling the control members of the lifting rods (35) and (41).

5. Transport vehicle according to one of the preceding claims, **characterized in that** sensors (46) for detecting the rotation movement of the drive wheels (6) are present, which sensors may also determine slippage on each drive wheel (6) dependent on the speed of the transport vehicle.

## Revendications

1. Véhicule de transport pour le transport sans perturbation de rayonnages de chargement dans des usines avec des zones d'ombre radio et un fonctionnement de roulage partiellement autonome, présentant les caractéristiques suivantes:
a) un boîtier de véhicule (3) avec une plaque de support (1) pour accueillir et transporter un rayonnage de chargement (12) avec des marchandises transportées (13), avec deux roues motrices (6) disposées sur les deux côtés au milieu du boîtier de véhicule (3) entraînées séparément chacune sur un axe de rotation (5) supporté séparément, dans lequel il se trouve chaque fois au moins une roue d'appui (9) sur le côté avant et sur le côté arrière du boîtier de véhicule (9),
**caractérisé en ce que**
b) il se trouve un bras transversal (25), qui relie les roues motrices (6), pouvant pivoter autour de l'axe de rotation (5) au moyen d'un levier coudé (46), de telle manière que celles-ci puissent effectuer des mouvements verticaux indépendants l'un de l'autre, dans lequel le bras transversal (25) est monté de façon rotative sur une tête de fourche (48),
c) il se trouve un élément de réglage (20) disposé de façon centrale, qui peut déplacer au moyen d'un levier de levage rotatif (33) et d'une barre de poussée (30) reliée à celui-ci deux barres de levage avant (35) et deux barres de levage arrière (41) pour lever ou abaisser la plaque de support (1),
d) il se trouve un système pour l'alimentation en énergie du véhicule de transport soit par des câbles inductifs posés dans le sol, au moyen d'un élément de logement inductif (14), soit par des stations d'alimentation en énergie abordables de façon stationnaire pour la fourniture d'énergie électrique, liquide ou gazeuse, dans lequel il se trouve dans le boîtier de véhicule (3) un espace de commande (28) pour des accumulateurs d'énergie correspondants,
e) il se trouve au moins un scanneur 3D (10) et au moins un détecteur de champ lumineux (15), ainsi qu'au moins une antenne WLAN (11) dans la région antérieure du corps de véhicule (9).

2. Véhicule de transport selon la revendication 1, **caractérisé en ce qu'**il se trouve sur chaque côté du véhicule de transport au moins un scanneur 3D (10) et au moins un détecteur de champ lumineux (15), dans lequel une autre antenne WLAN est installée dans la région postérieure du véhicule de transport.

3. Véhicule de transport selon une revendication 1 ou 2, **caractérisé en ce que** les barres de levage avant (35) présentent respectivement un élément de réglage (49) et les barres de levage arrière (41) présentent respectivement un élément de réglage (42) pour le réglage en hauteur séparé.

4. Véhicule de transport selon l'une quelconque des revendications précédentes, **caractérisé en ce que** le centre de gravité du rayonnage de chargement (12) est détecté au moyen de capteurs, et **en ce que** le résultat d'une telle détermination du centre de gravité est utilisé pour la commande des éléments de réglage pour les barres de levage (35) et (41).

5. Véhicule de transport selon l'une quelconque des revendications précédentes, **caractérisé en ce qu'**il se trouve des capteurs (46) pour la détection du mouvement de rotation des roues motrices (6), qui peuvent également déterminer le patinage à chaque roue motrice (6) en fonction de la vitesse du véhicule de transport.
